# EUROPEAN PATENT SPECIFICATION

(11) **EP 0 680 837 B1**
(45) Date of publication and mention of the grant of the patent: **16.12.1998**
(21) Application number: 95201970.1
(22) Date of filing: 18.10.1993
(51) Int. Cl.: B60C 11/03, B60C 11/04

(54) **Pneumatic tyre**
Luftreifen
Bandage pneumatique

(30) Priority: 19.10.1992 JP 306542/92
(43) Date of publication of application: 08.11.1995
(62) Divisional of application: 93308265.3
(73) Proprietor: SUMITOMO RUBBER INDUSTRIES LIMITED, Kobe-shi, Hyogo-ken (JP)
(72) Inventor: Tanaka, Masatoshi, Takarazuki-shi, Hyogo-ken (JP)
(74) Representative: Stewart, Charles Geoffrey

(56) References cited:
- FR-A- 2 398 625
- FR-A- 2 608 516
- US-A- 3 980 118
- PATENT ABSTRACTS OF JAPAN vol. 010 no. 163 (M-487) ,11 June 1986 & JP-A-61 016110 (SUMITOMO GOMU KOGYO KK) 24 January 1986,
- PATENT ABSTRACTS OF JAPAN vol. 015 no. 354 (M-1155) ,6 September 1991 & JP-A-03 139402 (SUMITOMO RUBBER IND LTD) 13 June 1991,

## Description

The present invention relates to a pneumatic tyre having an improved tread portion reducing tyre noise without deteriorating wet performance.

Recently, as the noise generated by the car mechanism and body becomes less, the percentage of the noise generated by the tyres is increased, and so there is an increasing demand for a low noise tyre.

It is especially effective in reducing tyre noise to reduce a relatively high frequency noise to which the human ears are sensitive, that is, the noise whose frequency range is around 1 kHz.

Air resonance noise is such a high frequency tyre noise. The air resonance noise is explained as follows.

In the ground contacting patch of the tyre, an air tube is formed by the road surface and any continuous circumferential groove which is provided in the tyre tread portion. During running, the air tube is excited by air flow, tread deformation or movement, roughness of the road surface and the like, and a sound having a specific wave length which corresponds to twice the length of the air tube is generated.

Most of the tyre noise in the frequency range of 800 to 1.2kHz generated by the tyre having a circumferential groove is such air resonance noise, and the frequency of the air resonance is almost constant independent of running speed.

Since it is known that air resonance can be prevented by decreasing the groove volume, it has been suggested to decrease the groove volume and/or the number of circumferential grooves. However, as a result, wet performance characteristics such as aquaplaning, wet grip and the like are invariably decreased.

A tyre in accordance with the preamble of claim 1 having two circumferentially extending tread grooves defining between them a continuous central rib to reduce pattern noise emission whilst maintaining wet performance is known for example from FR-A-2608516.

A tyre have a straight circumferential groove and a zigzag circumferential groove on opposite sides of the tread centreline to promote uniform wear of the whole tread is disclosed by JP-A-61-16110.

It is an object of the present invention to provide a pneumatic tyre in which, by reducing the air resonance noise, the overall tyre noise is reduced without sacrificing wet performance.

According to the present invention a pneumatic tyre comprises a tread portion with tread edges, said portion having a convex profile having a single radius or multiple radii, said tread portion provided with two circumferential grooves extending continuously in the circumferential direction of the tyre, defining groove edges, said two circumferential grooves disposed one on each side of the tyre equator to define a circumferentially extending continuous rib therebetween, the width of each circumferential groove being more than 16% of the ground contacting width, the total width of the two circumferential grooves being not more than 50% of the ground contacting width, characterised by one of the groove edges adjacent to one of the tread edges being straight, and the other groove edge adjacent to the other tread edge being zigzag or wavy, each of the circumferential grooves having a flat groove bottom and an axially inner groove wall and an axially outer groove wall which are perpendicular, and the corners therebetween being rounded such that the radius of the curvature of the axially outer corner is in the range of from 1.5 to 3 times the radius of the curvature of the axially inner corner.

Embodiments of the present invention will now be described in detail in conjunction with the accompanying drawings, in which:
Fig.1 is a perspective view of an embodiment of the present invention;
Fig.2 is a cross sectional view of the circumferential groove of Fig.1 showing the section shape thereof; and
Figs.3 and 4 are graphs showing the results of noise tests.

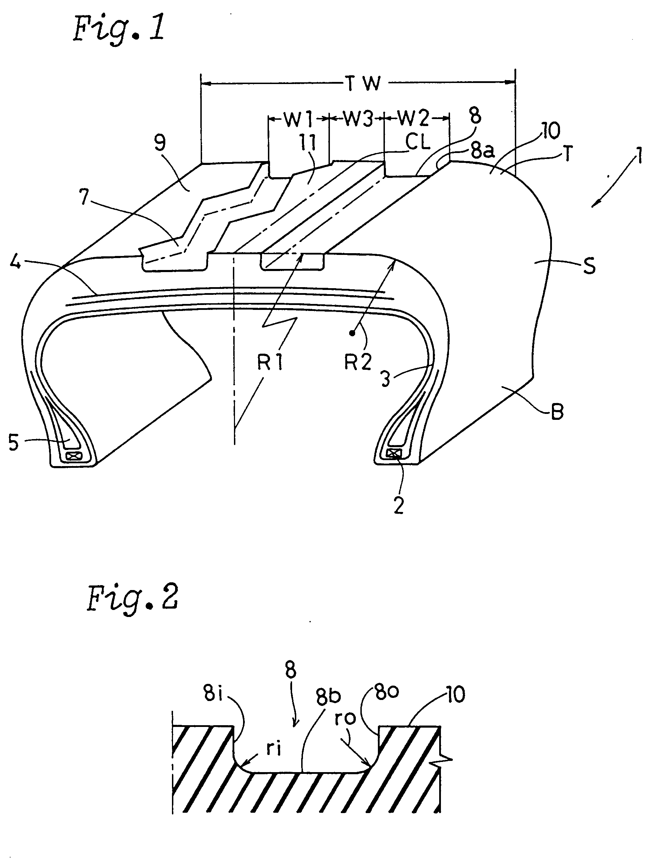

In Fig.1, the tyre 1 is a passenger radial tyre having an aspect ratio (tyre section height/tyre width) in the range of 0.4 to 0.6.

The tyre 1 comprises a radial ply carcass 3 extending between bead portions B through a tread portion T and sidewall portions S, and turned up around each bead core 2 from the axially inner side to the outer side of the tyre, a belt 4 disposed radially outside the carcass 3 and inside of the tread portion T, and a bead apex 5 disposed between the main portion and each turned up portion of the carcass and extending radially outwardly of each bead core 2.

The carcass 3 comprises at least one ply of radially arranged organic fibre cords such as nylon, rayon, polyester or the like.

The belt 4 comprises two or more crossed plies of high modulus cords such as steel, aromatic polyamide or the like laid at a relatively small angle of from 15 to 30 degrees with respect to the tyre circumferential direction.

The tread portion T has a convexly curved profile having a single radius or multiple radii.

The tread portion T is provided with two circumferential grooves 7 and 8 extending continuously in the tyre circumferential direction of the tyre.

The width W1,W2 of the circumferential grooves 7 and 8 is more than 16% of the ground contacting width TW.

Here, the ground contacting width TW is the axial width between the axially outermost points of the ground contacting region of the tread surface when the tyre is mounted on its regular rim, inflated to its regular pressure, and loaded to its regular load. The regular rim is the rim officially recommended for the tyre by, for example, TRA (USA), ETRTO (Europe), JATMA (Japan) and the like, and the regular inner pressure and the regular load are the maximum air pressure and the maximum tyre load for the tyre official specified in Air-pressure/Maximum-load Table by the same associations.

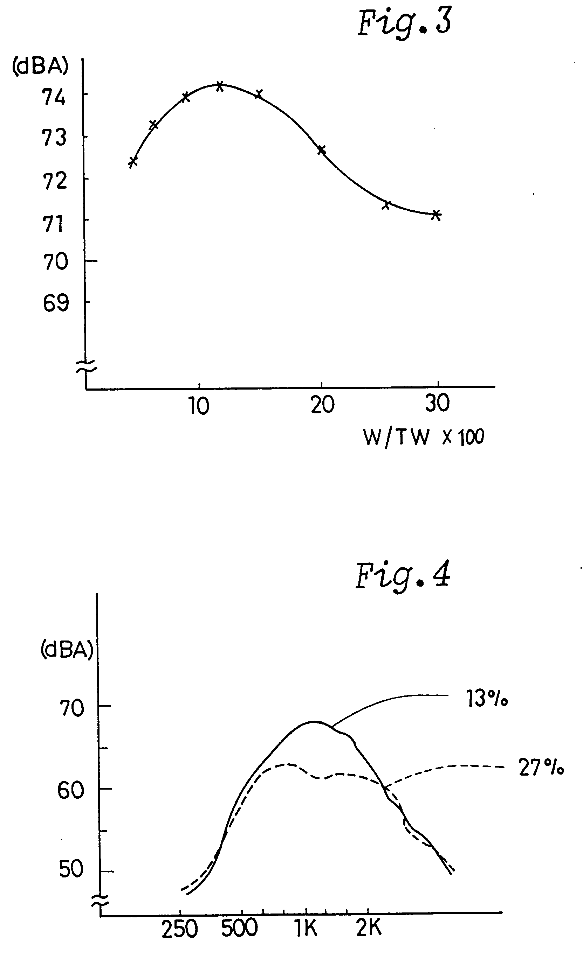

Fig.3 shows a test result showing the tyre noise level as a function of the percentage (W/WT x 100) of the groove width (W) to the ground contacting width (WT).

The test was made using 205/55R15 plane tyres provided with only one circumferential groove having a U-shaped cross section.

Changing the width (W) of the circumferential groove, the running noise of the test tyre was measured according to a JASO test procedure. The microphone position was 7.5 meters from the vehicle, the running speed was 60 km/h, and the test car was a Japanese made 2000cc passenger car.

By this test result, it was confirmed that, in the lower % range the noise level is decreased by decreasing the groove width (W). However, it was discovered that a single peak lies at around 13%, and in the range of over 13%, the noise level decreases with further increased groove width W.

Further, the rate of decrease becomes remarkable from 16%.

Fig.4 shows the frequency spectrums at the peak (13%) and a higher percentage of 27%.

From this analysis, it was discovered that the noise around 1kHz was remarkably decreased.

Thus, it was discovered that by setting the circumferential groove width over 16%, harsh 1kHz noise is effectively reduced, and as a result, the overall tyre noise can be effectively reduced.

Therefore, as explained above, the width W of the circumferential groove was set to be more than 16% of the ground contacting width TW.

As known from Fig.3, if the width is smaller than 8% of TW, as the air resonance is controlled, such a narrow circumferential groove may be used in combination with the above-mentioned wider circumferential groove.

In other words, the tread portion is not provided with any circumferential groove having a width of from 8 to 16 % of the ground contacting width TW.

The depth of the circumferential groove 7, 8 is in the range of from 4 to 8 % of the ground contacting width TW.

In the embodiment shown in Fig.1, the tread surface T is defined by a crown part having a single radius R1 of curvature having a centre on the tyre equator, and a pair of shoulder parts having a single radius R2 of curvature which is smaller than the radius R1.

The tread crown part is that part extending from the tyre equator CL towards each side thereof by 30% of the ground contacting width TW.

Each of the shoulder parts extends axially outwardly from each of the axial edges of the crown part, thereby having 20% or more of the tread ground contacting width TW.

The crown part and shoulder parts are connected smoothly without forming any inflection point.

Within the above-mentioned tread cross part, that is, within the 60% width, two circumferential groove 7 and 8 are disposed one on each side of the tyre equator CL.

The widths W1 and W2 of the circumferential grooves 7 and 8, respectively, are more than 16% of the ground contacting width TW.

Further, the total (W1+W2) of the groove widths W1 and W2 is preferably set to be not more than 50% of the ground contacting width TW.

If the total (W1+W2) is more than 50%, the dry grip, steering stability and the like are deteriorated.

Between the above-mentioned two circumferential grooves 7 and 8, a circumferentially extending continuous centre rib 11 is formed on the tyre equator.

The width W3 of the centre rib 11 is in the range of 5 to 15% of the ground contacting width TW.

If the width W3 is less than 5%, the axial rigidity of the rib decreases and the rib is liable to become a source of noise. Further, the rib wears rapidly to cause uneven wear.

On the axially outer side of each of the circumferential grooves 7 and 8, a circumferentially extending continuous shoulder rib 9 and 10 is formed.

In this embodiment, further, the circumferential groove 8 is formed as a straight groove, and the other circumferential groove 7 is formed as a zigzag groove. Accordingly, the tread pattern is not symmetrical with respect to the tyre equator CL.

This asymmetrical tyre is mounted on a car in such a manner that the straight circumferential groove 8 is located on he outside of the car, and the zigzag circumferential groove 7 is located on the inside of the car.

Since the shoulder rib 10 located axially outwards of the straight groove 8 has a larger rigidity than the other shoulder rib 9 located axially outwards of the zigzag groove 7, the deformation and movement during cornering is controlled to improve steering stability.

The zigzag circumferential groove 7 improves the wet grip due to a so called wiping effect of the zigzag edges.

As the straight groove generates less noise than the zigzag groove, such arrangement helps to decrease the tyre noise.

When the groove edge has a zigzag configuration as above, a wavy configuration or the like, in order to determine the above-mentioned widths W1, W3, etc., the centre line of the amplitude thereof, that is, a straight circumferential line drawn in the centre between the axially outermost point and the axially innermost point of the edge is used.

The circumferential grooves 7 and 8 have a cross sectional shape shown in Fig.2, in which the groove 8 is taken as an example.

The axially inner groove wall (8i) and the axially outer groove wall (8o) are perpendicular, and the groove bottom (8b) is flat. The corners therebetween are rounded. The radius (ro) of the curvature of the axially outer corner is in the range of from 1.5 to 3 times the radius (ri) of the curvature of the axially inner corner, whereby the shoulder rib 10 is increased in rigidity to improve the steering stability during cornering, and the centre rib 11 is decreased in rigidity to improve ride comfort and wet grip.

In the present invention, axial grooves, sipes (cuts or narrow slits) and the like can be formed in the ribs such as the centre rib 11 and the shoulder ribs 9 and 10.

## Claims

1. A pneumatic tyre comprising a tread portion (T) with tread edges, said portion (T) having a convex profile having a single radius or multiple radii, said tread portion (T) provided with two circumferential grooves (7,8) extending continuously in the circumferential direction of the tyre, defining groove edges, said two circumferential grooves disposed one on each side of the tyre equator to define a circumferentially extending continuous rib (11) therebetween, the width (W1,W2) of each circumferential groove (7,8) being more than 16% of the ground contacting width (TW), the total width of the two circumferential grooves (7,8) being not more than 50% of the ground contacting width (TW), characterised by one of the groove edges adjacent to one of the tread edges being straight, and the other groove edge adjacent to the other tread edge being zigzag or wavy, each of the circumferential grooves having a flat groove bottom (8b) and an axially inner groove wall (8i) and an axially outer groove wall (8o) which are perpendicular, and the corners therebetween being rounded such that the radius (ro) of the curvature of the axially outer corner is in the range of from 1.5 to 3 times the radius (ri) of the curvature of the axially inner corner.

2. A pneumatic tyre according to claim 1, characterised in that one of the circumferential grooves (7,8) is a straight groove (8), and the other groove m(7) is a zigzag groove.

3. A pneumatic tyre according to either of claim 1 or 2, characterised in that the width (W3) of the rib (11) is in the range of from 5 to 15% of the ground contacting width (TW).

4. A pneumatic tyre according to any of claims 1, 2 or 3, characterised in that the depth of the circumferential grooves (7,8) is in the range of from 4 to 8% of the ground contacting width (TW).

5. A pneumatic tyre according to any one of claims 1 to 4, characterised in that the two circumferential grooves (7,8) are disposed in a tread crown part, said tread crown part is such part as extending from the tyre equator CL towards each side thereof by 30% of the ground contacting width TW.

6. A pneumatic tyre according to any of claims 1 to 5, characterised in that the tread portion (t) is not provided with any additional circumferential groove having a width of from 8 to 16% of the ground contacting width TW.

## Patentansprüche

1. Luftreifen, der einen Laufflächenteil (T) mit Laufflächenrändern umfaßt, wobei der Teil (T) ein konvexes Profil mit einem einzigen Radius oder mehreren Radien aufweist, wobei der Laufflächenteil (T) mit zwei Umfangsrillen (7,8) versehen ist, die sich fortlaufend in der Umfangsrichtung des Reifens erstrecken und Rillenränder festlegen, wobei die beiden Umfangsrillen jeweils aufjeder Seite des Reifenäquators angeordnet sind, so daß sie eine sich in Umfangsrichtung erstreckende, fortlaufende Rippe (11) dazwischen festlegen, wobei die Breite (W1, W2) jeder Umfangsrille (7, 8) größer als 16% der Bodenkontaktbreite (TW) ist, wobei die Gesamtbreite der beiden Umfangsrillen (7, 8) nicht größer als 50% der Bodenkontaktbreite (TW) ist, dadurch gekennzeichnet, daß einer der Rillenränder benachbart zu einem der Laufflächenränder gerade ist, und der andere Rillenrand benachbart zu dem anderen Laufflächenrand zickzack-förmig oder wellenförmig ist, wobei jede der Umfangsrillen einen ebenen Rillenboden (8b) und eine axial innere Rillenwand (8i) und eine axial äußere Rillenwand (8o) aufweist, die senkrecht stehen, und wobei die Ecken dazwischen derart gerundet sind, daß der Krümmungsradius (ro) der axial äußeren Ecke im Bereich des 1,5 bis 3-fachen des Krümmungsradius (ri) der axial inneren Ecke liegt.

2. Luftreifen nach Anspruch 1, dadurch gekennzeichnet, daß eine der Umfangsrillen (7, 8) eine gerade Rille (8) ist und die andere Rille m(7) eine Zickzack-Rille ist.

3. Luftreifen nach Anspruch 1 oder 2, dadurch gekennzeichnet, daß die Breite (W3) der Rippe (11) im Bereich von 5 bis 15% der Bodenkontaktbreite (TW) liegt.

4. Luftreifen nach einem der Ansprüche 1, 2 oder 3, dadurch gekennzeichnet, daß die Tiefe der Umfangsrillen (7, 8) im Bereich von 4 bis 8% der Bodenkontaktbreite (TW) liegt.

5. Luftreifen nach einem der Ansprüche 1 bis 4, dadurch gekennzeichnet, daß die beiden Umfangsrillen (7, 8) in einem Laufflächenkronenteil angeordnet sind, wobei der Laufflächenkronenteil ein derartiger Teil ist, der sich von dem Reifenäquator CL in Richtung jeder Seite von diesem über 30% der Bodenkontaktbreite TW erstreckt.

6. Luftreifen nach einem der Ansprüche 1 bis 5, dadurch gekennzeichnet, daß der Laufflächenteil (t) nicht mit irgendeiner zusätzlichen Umfangsrille versehen ist, die eine Breite von 8 bis 16% der Bodenkontaktbreite TW aufweist.

## Revendications

1. Pneumatique comprenant une partie de bande de roulement (T) ayant des bords de bande de roulement, cette partie (T) ayant un profil convexe possédant un seul rayon ou plusieurs rayons, la partie de bande de roulement (T) ayant deux gorges circonférentielles (7, 8) gui s'étendent de façon continue dans la direction circonférentielle du pnematique et délimitent des bords de gorges, les deux gorges circonférentielles étant placées chacune d'un côté de l'équateur du pnematique afin qu'elles délimitent une nervure circonférentielle continue (11) entre elles, la largeur (W1, W2) de chaque gorge circonférentielle (7, 8) étant supérieure à 16 % de la largeur de contact avec le sol (TW), la largeur totale des deux gorges circonférentielles (7, 8) ne dépassant pas 50 % de la largeur de contact avec le sol (TW), caractérisé en ce que l'un des bords de gorge adjacent à l'un des bords de bande de roulement est rectiligne et l'autre bord de gorge adjacent à l'autre bord de bande de roulement est sinueux ou en zigzag, chacune des gorges circonférentielles ayant un fond plat (8b), une paroi axialement interne (8i) et une paroi axialement externe (8o) de gorge qui sont perpendiculaires, et les coins intermédiaires sont arrondis si bien que le rayon (ro) de courbure du coin axialement externe est compris entre 1,5 et 3 fois le rayon (ri) de courbure du coin axialement interne.

2. Pneumatique selon la revendication 1, caractérisé en ce que l'une des gorges circonférentielles (7, 8) est une gorge rectiligne (8) et l'autre gorge (7) est une gorge en zigzag.

3. Pneumatique selon la revendication 1 ou 2, caractérisé en ce que la largeur (W3) de la nervure (11) est comprise entre 5 et 15 % de la largeur de contact avec le sol (TW).

4. Pneumatique selon l'une quelconque des revendications 1, 2 et 3, caractérisé en ce que la largeur des gorges circonférentielles (7, 8) est comprise entre 4 et 8 % de la largeur de contact avec le sol (TW).

5. Pneumatique selon l'une quelconque des revendications 1 à 4, caractérisé en ce que les deux gorges circonférentielles (7, 8) sont placées dans une partie bombée de la bande de roulement, cette partie bombée étant la partie partant de l'équateur CL du pneumatique vers chaque côté sur 30 % de la largeur TW de contact avec le sol.

6. Pneumatique selon l'une quelconque des revendications 1 à 5, caractérisé en ce que la partie de bande de roulement (T) n'a pas de gorge circonférentielle supplémentaire de largeur comprise entre 8 et 16 % de la largeur de contact avec le sol TW.
